Europäisches Patentamt

European Patent Office

Office européen des brevets

(11) Publication number: **0 194 124**
**A2**

## (12) EUROPEAN PATENT APPLICATION

(21) Application number: 86301486.6

(22) Date of filing: 03.03.86

(51) Int. Cl.⁴: **H02G 15/26** , H02G 15/18

(30) Priority: 08.03.85 GB 8506104

(43) Date of publication of application:
**10.09.86 Bulletin 86/37**

(84) Designated Contracting States:
**AT BE CH DE FR GB IT LI LU NL SE**

(71) Applicant: ALH SYSTEMS LTD
**Bath Road**
**Melksham Wiltshire SN12 8AA(GB)**

(72) Inventor: **Curtis, Robert Leslie**
**66 Paxcroft Way**
**Trowbridge Wiltshire(GB)**

(74) Representative: **Harrison, David Christopher et al**
**MEWBURN ELLIS & CO 2/3 Cursitor Street**
**London EC4A 1BQ(GB)**

(54) Improvements in cable junctions.

(57) The envelope of an enclosed, pressurisable, cable junction is formed at least partly of heat-shrunk material (14). A rigid plate (1) is entrapped by the envelope and is used to secure a valve (27) which is inserted into it through an aperture formed in the envelope after heat-shrinking has occurred.

Fig.3.

EP 0 194 124 A2

## IMPROVEMENTS IN CABLE JUNCTIONS

This invention relates to improvements in cable junctions.

Modern cable systems are protected from ingress of water either by being stuffed with jelly or else by being kept at a slightly elevated pressure by pumping air into them.

In this latter system it is necessary to test the efficiency of the air pressurisation from time to time.

The points at which leakages are particularly likely to occur are where junctions have been formed and the present known procedure for testing is that a hole is drilled into the cable upstream from the junction (that is to say nearer to the source of pressurised air) and a valve is fitted into the hole. Pressure readings etc can then be taken through the valve.

Quite apart from the disadvantageous nature of drilling into the cable, the dangers of which are obvious, there is the problem that many access pits are modular and adapted to fit fairly closely to the dimensions of standard junctions; so there is very little if any room to drill into the cable beyond the end of the junction.

The present invention is concerned with providing a test valve actually in a junction and provides both the means and method of doing this.

It is concerned with a type of junction which is formed with the aid of and remains covered by a shrink fitted envelope. These types of system are now very well known and examples in the patent literature include GB-A-1604981, GB-A-2095926, US-A-4085286 and US-A-4123047. These documents themselves contain numerous prior art references.

The basic embodiment of the present invention is extremely simple. A rigid plate with a pre-formed screw threaded hole in it is trapped under the shrink envelope as it is placed around the junction. When the material of the envelope is shrunk, the position of the plate can readily be seen because it causes a bulge in the otherwise basically smooth surface. A small hole is then made in the material of the envelope to give access to the screw threaded hole in the plate, and the screw threaded stem of a valved assembly is fitted into the plate through that hole. The stem may have a shoulder which engages over the cut edge of the sleeve material so as to form a seal with it.

In another aspect the invention comprises a kit for forming a valved cable junction which is to be enclosed by a shrunk envelope, the kit comprising a rigid anchor plate, a valved assembly, and securing means effective to secure the two together, e.g. a pretapped screw threaded bore through the plate and a stem of the valved assembly screw threadedly engageable with that bore. A preferred conformation for the plate is rectangular in plan with rounded corners and edges, and with an undersurface (i.e. the surface to be nearer to the cable in use) having a cylindrical concavity along the major axis so as to conform, though preferably not exactly, to the curvature of the underparts of the junction and so that the major edges of the plate tend to protrude more markedly under the wrapping.

In another aspect the invention comprises a valved cable junction assembly where a stem of a valve protruding to the outside of the assembly is engaged to a rigid plate secured into the assembly by being entrapped by a shrunk envelope of the assembly. The valve may be screwed through into the plate through a hole in the sleeve formed after shrinkage.

In a third aspect, the invention offers a method of forming an enclosed cable junction wherein a rigid plate is entrapped within the envelope formed by shrinkage, a hole is cut over the plate after shrinkage and a valved assembly is secured into the plate through the access given by the hole. Particularly, the plate may be entrapped and held directly between the envelope and a shell which is the outermost part of a conventional junction core.

In securing the shrink wrapping during the making of such a junction, a specially-shaped clip may be used to grip the edges of the wrapping which are brought together. The clip has essentially the shape when seen end-on of a regular pentagon with an interruption at one angle of the pentagon representing the mouth of the clip. The walls adjacent each end may be tapered back to assist feeding the clips onto and along the edges of the wrapping.

A particular embodiment of the invention will now be described by reference to the accompanying drawings wherein:

Figure 1 is an exploded perspective view of a plate and valved assembly;

Figure 2 shows a complete junction assembly with valved assembly and plate fitted;

Figure 3 is a section on the line III-III, Figure 2; and

Figure 4 and 5 respectively end view and underneath views of clips which are used in making the junction.

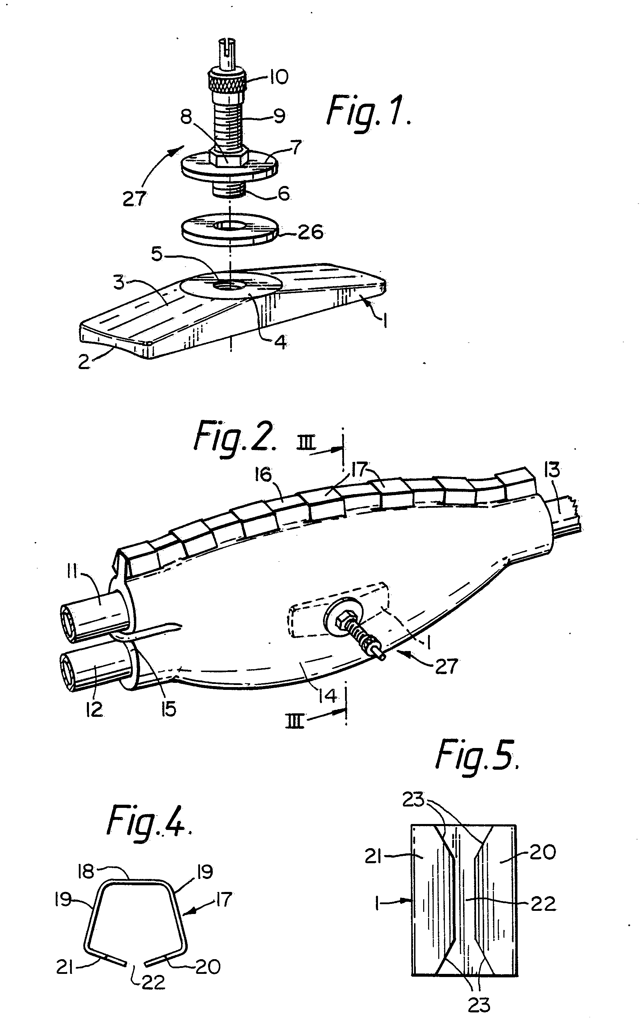

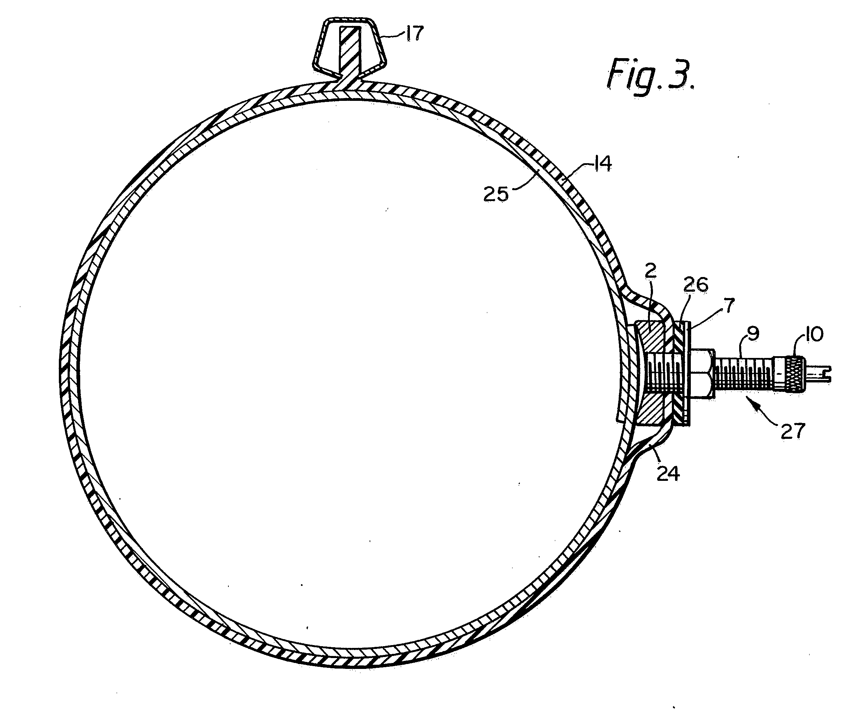

Figure 1 shows a rigid plate 1 of generally a rectangular plan view but having rounded corners and edges. Its undersurface has a shallow cylindrical concavity 2 aligned with the major axis of the rectangle and extending the whole length of that surface. The upper surface 3 is slightly ridged towards the centre where there is a plateau 4 at the middle of which is a screw threaded bore 5 extending through the complete thickness of the plate. A preferred material for the plate is metal, but any other strong rigid material may be used.

The bore 5 is to receive the stem correspondingly screw threaded at 6 of a valved assembly 27. Normally the valved assembly will be an integral valve as shown here, however a screw threaded stem leading through appropriate airtight ducting to a remote valve is not excluded. The stem 6 has a flange 7 above which is integrally formed a hexagon facet 8 to enable tightening of the stem into the plate. A washer 20 may be fitted onto the stem under the plate 7. Above the plate 7 and facets 8 the stem continues at 9 and terminates in a cap 10, a one-way valve being accommodated within the stem 9 in the conventional way.

Figures 2 and 3 illustrate a cable junction where two minor cables 11,12 are joined to a major cable 13, the joint being surrounded by a core held in place and enclosed by a shrink wrapping 14.

Once other elements of the core around the junction have been put in place -the nature of these is not critical to the present invention and is described in the prior art documents -the plate 1 is held against a suitable outer surface of the core formed by those inner elements (usually this outer surface will be provided by a split shell 25 of aluminium or other light metal) with its major axis aligned with the major axis of the junction. Preferably it will be over or adjacent to the split 26 in the shell to assist pressure communication. The concavity in its undersurface helps it to align, though there is no need for any exact conformation to that surface. The plate may be manually held there or be held lightly by tape or other suitable means while the wrapping 14 is brought around the junction and secured temporarily by clips 17. Various forms of clip for this purpose are also seen in the prior art as are also clips which may be used to hold the wrapping together in the neck region 15 between the minor cables 11 and 12. Although any form of clip may be used on the drawntogether edge regions 16 which form a seam along one side of the junction while it is being formed, we prefer to use clips 17 of a novel configuration which are best seen in Figures 4 and 5. The clips are seen in end view in Figure 4 where the base 18 and two legs 19 form three adjacent sides of what is substantially a regular pentagon, jaw-forming sides 20,21 defining between them a mouth 22 where one angle of the regular pentagon is missing.

As can best be seen in Figure 5 which is an underneath view, the sides 20,21 are tapered away at 23 to each side of the mouth 22 so as to assist in allowing the clips 17 to be slid onto the seam.

These clips, which are extremely simple and cheap, may be discarded when, as is usual, the seam 16 is cut off and discarded after the formation of the junction has been completed and the wrapping has been shrunk, usually by heat, and has melted or bonded together and into a tubular envelope around and enclosing the junction.

When the wrapping 14 has been shrunk onto the junction, the presence underneath it of the plate 1 will cause an easily recognized bulge 24 to appear in its outer surface. To gain access to the interior of the junction a small hole is cut in the wrapping 14 over the plateau 4 of the plate and then the stem 6 can simply be screwed into the bore 5 which is thus exposed. Sealing to the junction may be achieved by entrapment of the edge portion of the wrapping 14 between the plate 1 and the flange 7 and/or by the washer 26 which may be provided underneath that flange.

Since access is gained by cutting a hole after shrinkage it follows that the material for the envelope is sent out, in a kit of parts which also includes the plate 1 and the valved assembly 27 and probably the shell 25, clips 17 and other conventional parts, in an integral and uninterrupted form and that the plate and valved assembly will be unattached to that material when sent out in the sense that it is not penetrated by them.

## Claims

1. A method of forming an enclosed cable junction by shrinking an at least partly shrinkable material (14) over the junction to form an envelope characterized by, to give valved access to the interior of the enclosure, entrapping a rigid anchor plate (1) within the enclosure, forming a hole in the material (14) after its shrinking to give access to the plate (1), and securing a valved assembly (27) to the plate (1) through the hole.

2. A method according to claim 1 including forming the envelope by wrapping a sheet of heat-shrinkable material - (14) around the junction and shrinking is performed by heating the material, the shrinking of the material pressing on and holding the plate (1).

3. A method according to claim 1 or claim 2 wherein the plate (1) is entrapped directly under the material (14) and directly above a shell (25) defining a core of the junction.

4. A method according to any one of the preceding claims wherein the securing is by screwing a screwthreaded stem - (6) of the valved assembly (27) into an aperture (5) in the plate (1).

5. A kit of parts for forming a valved enclosed cable junction comprising a rigid plate (1) for positioning within an envelope enclosing the junction and a valved assembly - (27), there being means (5,6) for securing together the plate (1) and valved assembly (27).

6. A kit of parts according to claim 5 wherein the rigid plate (1) has a surface (2) destined to be innermost which has a cylindrically concave depression along it and an opposite surface including a least a portion (4) which is planar, and the securing means including an aperture (5) extending from one said surface.

7. A kit of parts according to claim 6 wherein the valved assembly (27) includes a stem (9) with a screwthreaded end portion (6) for engagement with the aperture (5) of the plate (1) and a flange (7) on the stem (9) for entrapping the material (14) of the envelope between it and the portion (4) of the plate.

8. A kit of parts according to any one of claims 5-7 which is sent out with the valved assembly (27) and plate (1) separate from and unattached to any material for forming the envelope.

9. A cable junction enclosed by an envelope of material - (14) at least part of which is shrunk characterized in that to give access to pressurisation within the envelope, a valved assembly (27) penetrates the material (14) of the envelope and is secured to a rigid anchor plate (1) entrapped within the envelope.

10. A cable junction according to claim 9 wherein the valved assembly (27) is a stem (9) housing a valve, the stem (9) having a screw-threaded end portion (6) penetrating the material (14) and screw threadedly engaging an aperture (5) in the rigid plate (1).

11. A cable junction according to claim 9 or claim 10 wherein a core of the junction is surrounded by a shell (25), the plate (1) being immediately outside the shell (25) and immediately inside the material (14).

12. A cable junction according to any one of claims 9-11 wherein the plate (1) has a surface (2) with a cylindrical concave depression along it and an opposite surface including at least a portion (4) which is planar.

*Fig.1.*

10

8 9

7

27 6

26

5

3

2 4 1

*Fig.2.* III

16 17 13

11

12 15 14

III

27

*Fig.4.*

18 19

19 17

21 20

22

*Fig.5.*

23

21 20

1 22

23

Fig. 3.